# EUROPEAN PATENT SPECIFICATION

(11) **EP 3 889 015 B1**
(45) Date of publication and mention of the grant of the patent: **08.06.2022**
(21) Application number: 21160740.3
(22) Date of filing: 04.03.2021
(51) Int. Cl.: B62J 17/00, B62J 25/04, B62J 25/06, B62K 11/10

(54) **STRADDLED VEHICLE**
GRÄTSCHSITZFAHRZEUG
VÉHICULE À ENFOURCHER

(30) Priority: 31.03.2020 JP 2020064744
(43) Date of publication of application: 06.10.2021
(73) Proprietor: Yamaha Hatsudoki Kabushiki Kaisha, Iwata-shi, Shizuoka 438-8501 (JP)
(72) Inventor: KANTHACHIAN, Natthapong, 10540 Samutprakarn (TH); HONGPONG, Nantakorn, 10540 Samutprakarn (TH); YAMAUCHI, Yoshinori, 10540 Samutprakarn (TH)
(74) Representative: Grünecker Patent- und Rechtsanwälte PartG mbB

(56) References cited:
- EP-A1- 2 085 304
- EP-A1- 2 979 962
- JP-A- 2002 068 064

## Description

The present invention relates to a straddled vehicle.

There is a type of straddled vehicle that an exterior cover is attached to a side cover disposed below a seat. For example, JP 4848550 A describes a straddled vehicle that an exterior component, having a different color from a side cover, is attached to the side cover. The exterior component extends backward and obliquely downward from a position lateral to a front cover to a position below a seat.

Such an exterior cover as described above, when enlarged, becomes likely to sag due to degradation in stiffness thereof. Therefore, the edge of the exterior cover is bent, whereby required stiffness of the exterior cover can be reliably achieved. In this case, however, the exterior cover is inevitably enlarged in a vehicle width direction. A rider puts each foot on a lateral side of the exterior cover. Because of this, when the exterior cover is enlarged in the vehicle width direction, comfort for each foot degrades accordingly. Further examples of said exterior covers are disclosed in the documents JP 2002 068064 A, featuring the preamble of claim 1; EP 2 979 962 A1 and EP 2 085 304 A1.

It is an object of the present invention to provide a straddled vehicle that can inhibit degradation in comfort for each foot on a straddled vehicle including a large-sized exterior cover. According to the present invention said object is solved by a straddled vehicle having the features of independent claim 1. Preferred embodiments are laid down in the dependent claims.

A straddled vehicle according to an aspect of the present teaching includes a head pipe, a down frame, a leg shield, a seat, a side cover, an undercover, and an exterior cover. The down frame extends downward from the head pipe. The leg shield is disposed behind the head pipe and the down frame. The seat is disposed behind the leg shield. The side cover is disposed below the seat and between the seat and the leg shield. The undercover is connected to a lower portion of the side cover. The undercover includes a footrest surface extending in a back-and-forth direction of the vehicle. The exterior cover is attached to the side cover.

The exterior cover includes a middle portion, a first extending portion, a second extending portion, a third extending portion, a fourth extending portion, a front recessed portion, an upper recessed portion, a lower recessed portion, and a rear recessed portion. The first extending portion extends forward and obliquely upward from the middle portion. The second extending portion extends forward and obliquely downward from the middle portion. The third extending portion extends backward and obliquely upward from the middle portion. The fourth extending portion extends backward and obliquely downward from the middle portion.

The front recessed portion is located between the first extending portion and the second extending portion and is recessed backward. The upper recessed portion is located between the first extending portion and the third extending portion and is recessed downward. The lower recessed portion is located between the second extending portion and the fourth extending portion and is recessed upward. The rear recessed portion is located between the third extending portion and the fourth extending portion and is recessed forward. The side cover includes a lower lateral surface disposed below the exterior cover. A lower end of the second extending portion and a lower end of the fourth extending portion are disposed upwardly away from the footrest surface.

In the straddled vehicle according to the present aspect, the exterior cover is formed in an X-shape by the first to fourth extending portions and the front, rear, upper, and lower recessed portions. Thus, the exterior cover has the X-shape with many protrusions and recesses. Hence, the exterior cover can be inhibited from being enlarged in a vehicle width direction, and simultaneously, can be enhanced in stiffness. The lower end of the second extending portion and that of the fourth extending portion are located above the lower lateral surface. Besides, the lower recessed portion exists above the footrest surface. Because of this, even when the exterior cover is provided as a large-sized component, degradation in comfort for a foot of a rider can be inhibited.

The lower lateral surface may be at least partially disposed between the lower end of the second extending portion and the footrest surface in an up-and-down direction of the vehicle. The lower lateral surface may be at least partially disposed between the lower end of the fourth extending portion and the footrest surface in the up-and-down direction. In this case, comfort for the foot of the rider is further enhanced.

The lower lateral surface may be shaped to be recessed in a position below the lower recessed portion. In this case, comfort for the foot of the rider is further enhanced by the lower lateral surface.

The exterior cover may be shaped to be recessed laterally inward in a position of the upper recessed portion. In this case, comfort for the foot of the rider is further enhanced by the recessed shape of the exterior cover.

The straddled vehicle may further include a tandem foot peg disposed below the seat. The rear recessed portion may be located above the tandem foot peg. In this case, comfort for a foot of a passenger riding in tandem with the rider is enhanced.

The rear recessed portion may be located laterally inside the third extending portion and the fourth extending portion. In this case, comfort for the foot of the passenger is further enhanced.

The lower end of the fourth extending portion may be located above the lower end of the second extending portion. A rear end of the third extending portion may be located backward of a rear end of the fourth extending portion. An upper end of the third extending portion may be located above an upper end of the first extending portion. In these cases, the exterior cover is further enhanced in stiffness by the shape thereof with large protrusions and recesses.

The exterior cover may include a first ridge extending over a range from the second extending portion to the third extending portion through the middle portion. In this case, deformation of the exterior cover is inhibited by the first ridge. Accordingly, the exterior cover is further enhanced in stiffness.

The exterior cover may include a second ridge and a third ridge. The second ridge may extend from the first extending portion to the middle portion. The third ridge may extend from the fourth extending portion to the middle portion. In this case, deformation of the exterior cover is inhibited by the second and third ridges. Accordingly, the exterior cover is further enhanced in stiffness.

A front end of the first extending portion and a front end of the second extending portion may be located forward of a front end of the seat. In this case, the exterior cover is provided on a wide range of the side cover. Accordingly, the side cover is further enhanced in stiffness.

The rear end of the third extending portion and the rear end of the fourth extending portion may be located backward of the front end of the seat. In this case, the exterior cover is provided on a wide range of the side cover. Accordingly, the side cover is further enhanced in stiffness.

The front end of the first extending portion, the front end of the second extending portion, the rear end of the third extending portion, and the rear end of the fourth extending portion may be disposed in positions different from each other in a vehicle width direction as seen in a vehicle top view. In this case, the exterior cover is further enhanced in stiffness by the three-dimensional shape thereof.

The middle portion may be at least partially located laterally inside the front end of the first extending portion. The middle portion may be at least partially located laterally inside the front end of the second extending portion. The middle portion may be at least partially located laterally inside the rear end of the third extending portion. The middle portion may be at least partially located laterally inside the rear end of the fourth extending portion. In this case, the middle portion is shaped to be recessed laterally inward with respect to the first to fourth extending portions. Accordingly, comfort for the foot of the rider is further enhanced.

### BRIEF DESCRIPTION OF THE DRAWINGS

FIG. 1 is a side view of a straddled vehicle according to an embodiment.
FIG. 2 is a perspective view of the straddled vehicle.
FIG. 3 is a top view of the straddled vehicle.
FIG. 4 is an enlarged view of a left side cover.
FIG. 5 is an enlarged view of the left side cover that a left exterior cover is detached.
FIG. 6 is a side view of the left exterior cover and shows the outer surface thereof.
FIG. 7 is a side view of the left exterior cover and shows the inner surface thereof.
FIG. 8 is a top view of the left exterior cover.
FIG. 9 is a front view of the left exterior cover.
FIG. 10 is a cross-sectional view of FIG. 4 taken along line X-X.
FIG. 11 is a cross-sectional view of FIG. 4 taken along line XI-XI.
FIG. 12 is a cross-sectional view of FIG. 4 taken along line XII-XII.
FIG. 13 is a cross-sectional view of FIG. 4 taken along line XIII-XIII.
FIG. 14 is a cross-sectional view of FIG. 4 taken along line XIV-XIV.
FIG. 15 is a cross-sectional view of FIG. 4 taken along line XV-XV.
FIG. 16 is a diagram showing a rider and a passenger riding in tandem on the straddled vehicle.

### DETAILED DESCRIPTION OF EMBODIMENTS

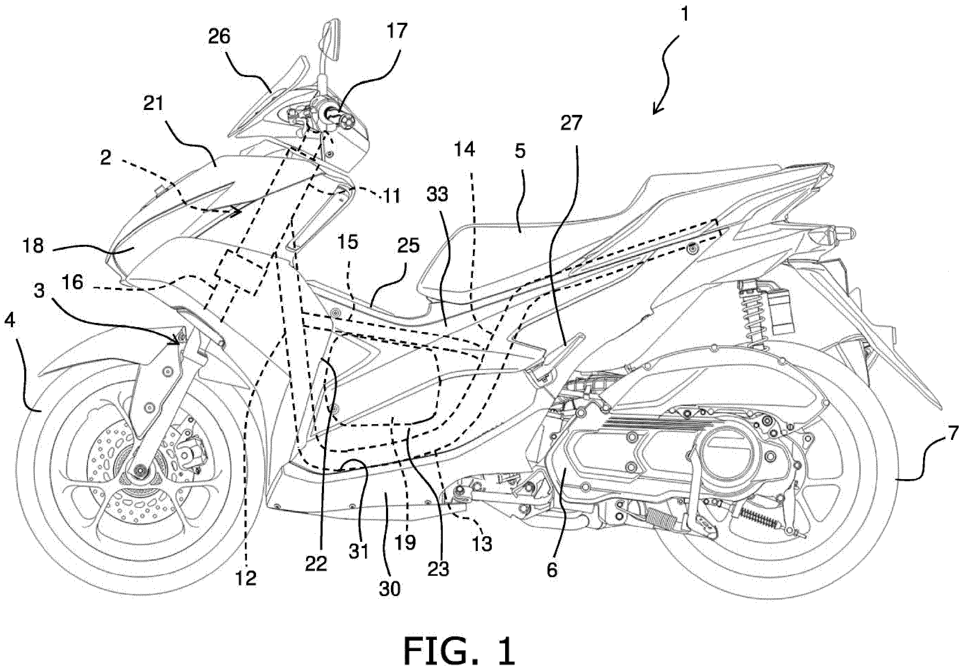

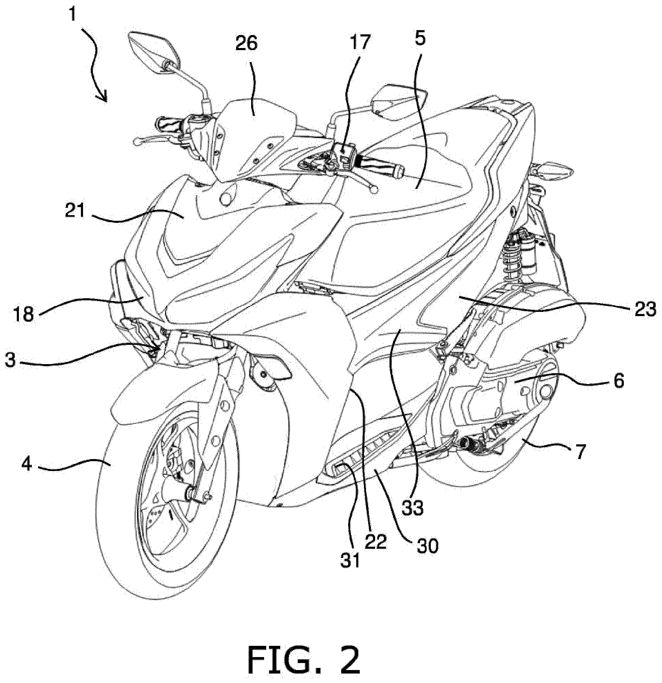

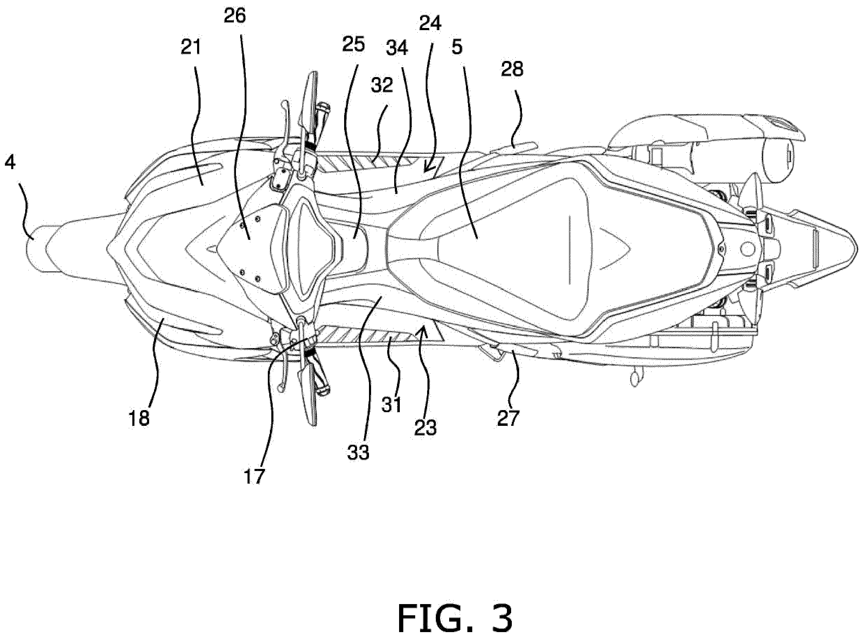

A straddled vehicle according to an embodiment of the present teaching will be hereinafter explained with reference to drawings. FIG. 1 is a side view of a straddled vehicle 1 according to the embodiment. FIG. 2 is a perspective view of the straddled vehicle 1. FIG. 3 is a top view of the straddled vehicle 1. The straddled vehicle 1 according to the present embodiment is a scooter. As shown in FIG. 1, the straddled vehicle 1 includes a vehicle body frame 2, a steering device 3, a front wheel 4, a seat 5, a power unit 6, and a rear wheel 7. It should be noted that in the following explanation, front, rear, right, and left directions are defined as indicating front, rear, right, and left directions seen from a rider seated on the seat 5.

The vehicle body frame 2 includes a head pipe 11, a down frame 12, a lower frame 13, a rear frame 14, and a coupling frame 15. The head pipe 11 is disposed in the middle of the vehicle in a vehicle width direction. The head pipe 11 extends forward and downward. The down frame 12 extends downward from the head pipe 11. The lower frame 13 extends backward from a lower portion of the down frame 12. The rear frame 14 extends backward and upward from a rear portion of the down frame 12. The coupling frame 15 is coupled to the down frame 12 and the rear frame 14.

The steering device 3 is supported by the head pipe 11 so as to be turnable. The steering device 3 supports the front wheel 4 such that the front wheel 4 is rotatable. The steering device 3 includes a front fork 16 and a handle member 17. The front fork 16 is supported by the head pipe 11 so as to be turnable. The front wheel 4 is supported by the front fork 16 so as to be rotatable. The handle member 17 can be operated by the rider in order to turn the front wheel 4. The handle member 17 extends in the vehicle width direction.

The seat 5 is disposed behind the head pipe 11. The seat 5 is disposed above the rear frame 14. The power unit 6 is disposed below the seat 5. The power unit 6 includes, for instance, an internal combustion engine. Alternatively, the power unit 6 may include an electric motor. The rear wheel 7 is supported by the power unit 6 so as to be rotatable.

The straddled vehicle 1 includes a front cover 21, a leg shield 22, a left side cover 23, a right side cover 24, a center cover 25, a handle cover 26, and an undercover 30. The front cover 21 is disposed in front of the head pipe 11. A headlight 18 is disposed in the front cover 21. The leg shield 22 is disposed behind the front cover 21. The leg shield 22 is disposed behind the head pipe 11 and the down frame 12. The seat 5 is disposed behind the leg shield 22.

The left side cover 23, the right side cover 24, and the center cover 25 are made of resin. The left and right side covers 23 and 24 are disposed below the seat 5, while being disposed between the seat 5 and the leg shield 22. The left side cover 23 covers the rear frame 14 from a left lateral side thereof. The right side cover 24 covers the rear frame 14 from a right lateral side thereof. The straddled vehicle 1 includes a left tandem foot peg 27 and a right tandem foot peg 28. The left and right tandem foot pegs 27 and 28 are disposed below the seat 5. The left tandem foot peg 27 is disposed laterally outside the left side cover 23. The right tandem foot peg 28 is disposed laterally outside the right side cover 24.

The center cover 25 is disposed between the seat 5 and the leg shield 22. The center cover 25 is disposed in the middle of the vehicle in the vehicle width direction. As seen in the vehicle side view, the center cover 25 slants backward and downward. The center cover 25 covers the coupling frame 15 from above. A fuel tank 19 is disposed below the center cover 25. The fuel tank 19 is at least partially disposed between the seat 5 and the leg shield 22. The fuel tank 19 is at least partially disposed below the coupling frame 15. The fuel tank 19 is supported by the coupling frame 15.

The handle cover 26 covers part of the handle member 17. The handle cover 26 is located above the front cover 21. The handle cover 26 is located above the head pipe 11. The handle cover 26 is turnable together with the handle member 17 with respect to the front cover 21.

The undercover 30 is disposed below the left and right side covers 23 and 24. The undercover 30 includes a left footrest surface 31 and a right footrest surface 32. The left and right footrest surfaces 31 and 32 are portions that the rider puts the feet. The left footrest surface 31 is disposed leftward of the left side cover 23. The left footrest surface 31 is disposed behind the leg shield 22. The left footrest surface 31 is connected to a lower portion of the left side cover 23. The left footrest surface 31 protrudes leftward from the lower portion of the left side cover 23. The left footrest surface 31 extends in a back-and-forth direction of the vehicle. The left footrest surface 31 is connected at the front end thereof to a lower portion of the leg shield 22. The right footrest surface 32 has a structure bilaterally symmetric to that of the left footrest surface 31. Because of this, detailed explanation of the right footrest surface 32 will be omitted.

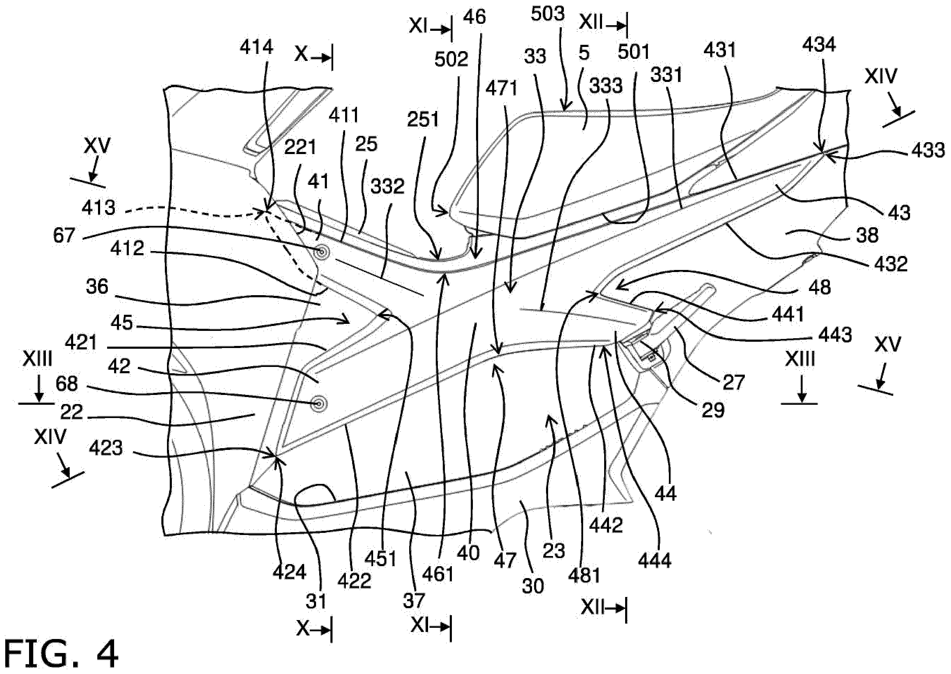

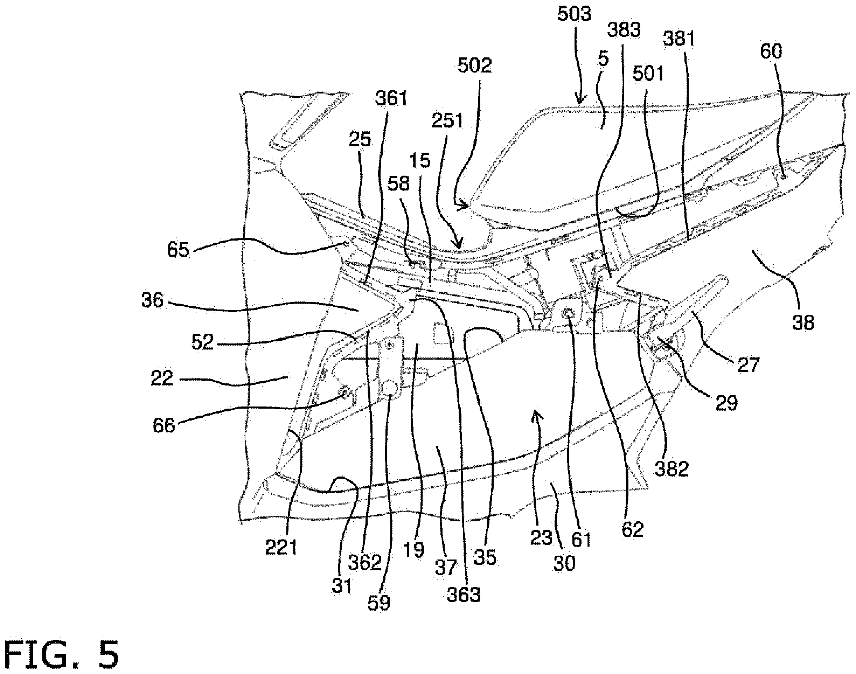

The straddled vehicle 1 includes a left exterior cover 33 and a right exterior cover 34. The left and right exterior covers 33 and 34 are made of resin. The left exterior cover 33 is attached to the left side cover 23. The right exterior cover 34 is attached to the right side cover 24. As seen in the vehicle side view, the left and right exterior covers 33 and 34 are each disposed backward of the head pipe 11. FIG. 4 is an enlarged view of the left side cover 23. FIG. 5 is an enlarged view of the left side cover 23 that the left exterior cover 33 is detached. As shown in FIG. 5, the left side cover 23 includes an opening 35. The opening 35 communicates with the internal space of the left side cover 23. The opening 35 is provided in correspondence with the position of the left exterior cover 33. The left exterior cover 33 is attached to the left side cover 23, whereby the opening 35 is closed.

As shown in FIG. 4, the left exterior cover 33 includes a middle portion 40, a first extending portion 41, a second extending portion 42, a third extending portion 43, a fourth extending portion 44, a front recessed portion 45, an upper recessed portion 46, a lower recessed portion 47, and a rear recessed portion 48. The first extending portion 41 extends forward and obliquely upward from the middle portion 40. The second extending portion 42 extends forward and obliquely downward from the middle portion 40. The third extending portion 43 extends backward and obliquely upward from the middle portion 40. The fourth extending portion 44 extends backward and obliquely downward from the middle portion 40.

The front recessed portion 45 is disposed between the first and second extending portions 41 and 42. The front recessed portion 45 is recessed backward. The upper recessed portion 46 is located between the first and third extending portions 41 and 43. The upper recessed portion 46 is recessed downward. The lower recessed portion 47 is located between the second and fourth extending portions 42 and 44. The lower recessed portion 47 is recessed upward. The rear recessed portion 48 is located between the third and fourth extending portions 43 and 44. The rear recessed portion 48 is recessed forward.

As shown in FIG. 5, the left side cover 23 includes a front lateral surface 36, a lower lateral surface 37, and a rear lateral surface 38. The front lateral surface 36 is disposed in front of the opening 35. The lower lateral surface 37 is disposed below the opening 35. The rear lateral surface 38 is disposed behind the opening 35. As shown in FIG. 4, the front lateral surface 36 is disposed in front of the front recessed portion 45. The lower lateral surface 37 is disposed below the lower recessed portion 47. The lower lateral surface 37 is connected to the left footrest surface 31. The rear lateral surface 38 is disposed behind the rear recessed portion 48.

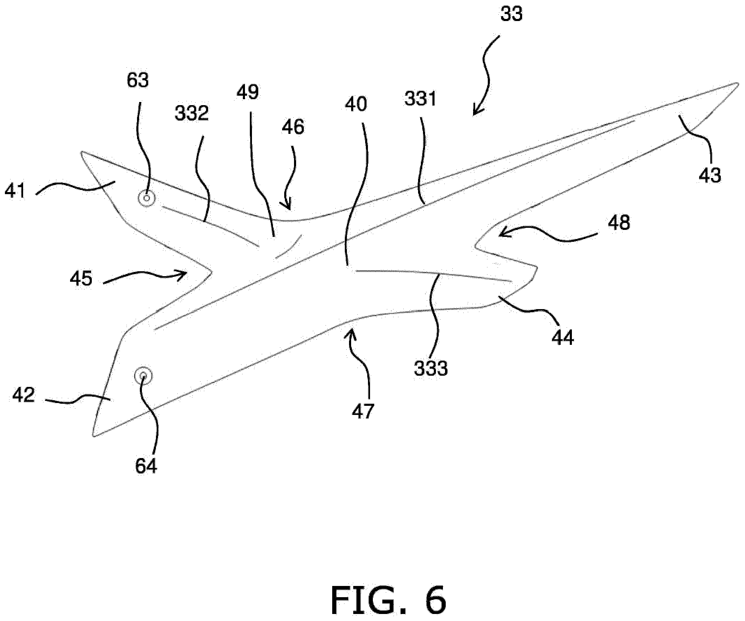

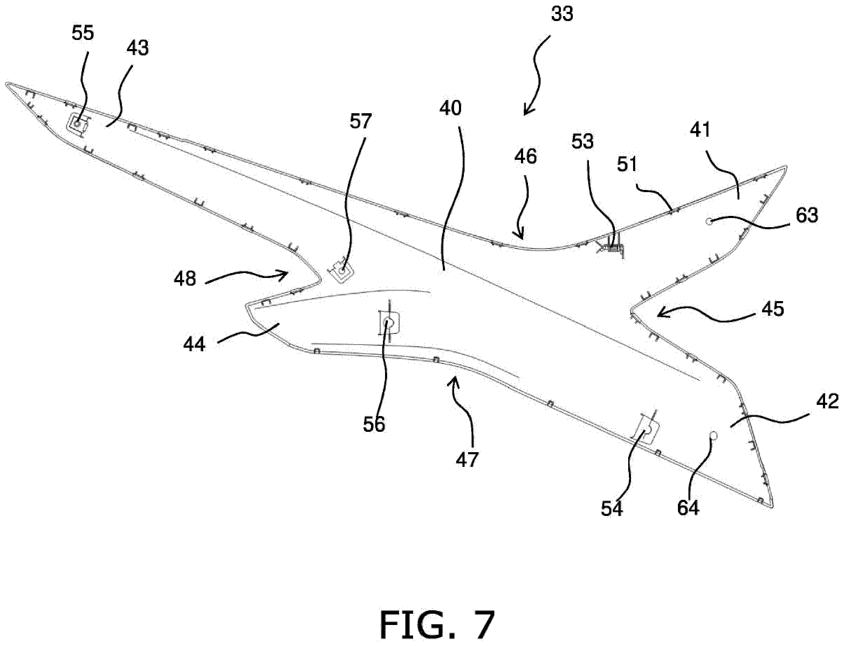

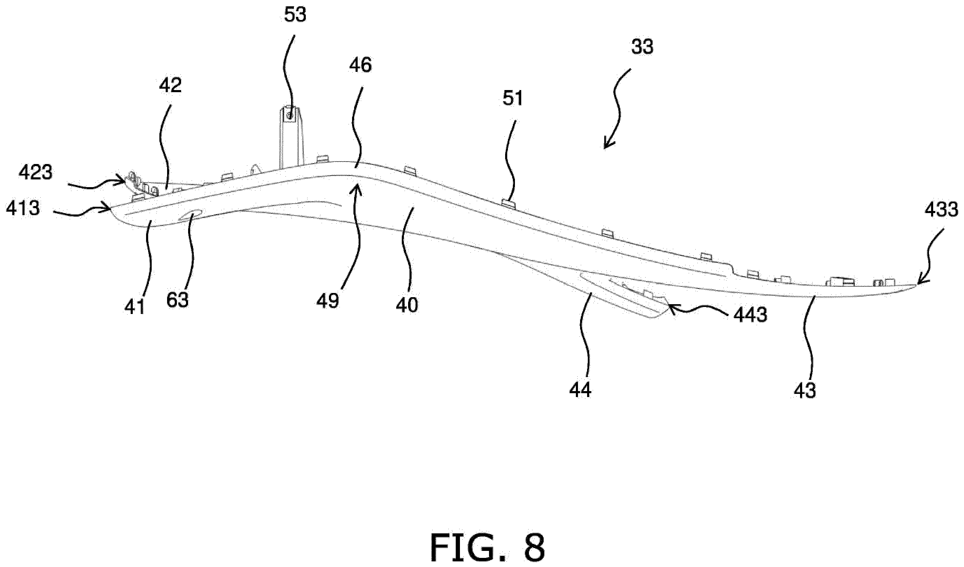

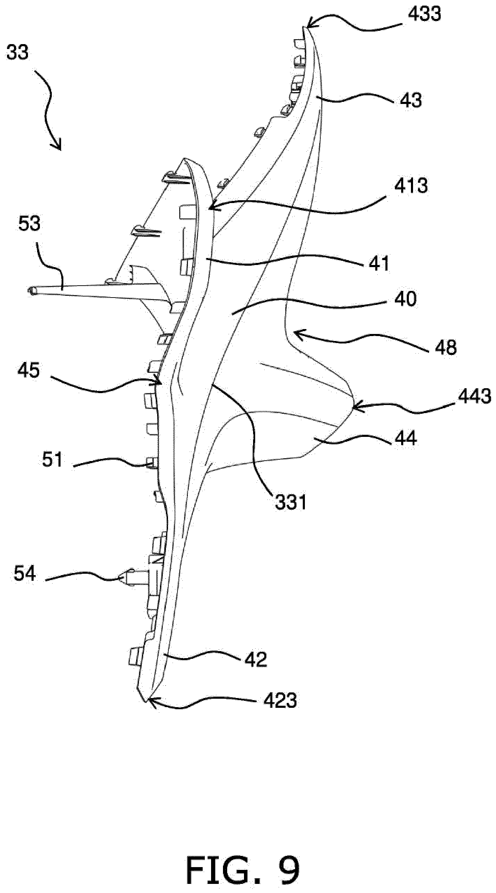

FIG. 6 is a side view of the left exterior cover 33 and shows the outer surface thereof. FIG. 7 is a side view of the left exterior cover 33 and shows the inner surface thereof. FIG. 8 is a top view of the left exterior cover 33. FIG. 9 is a front view of the left exterior cover 33. As shown in FIGS. 6 to 9, the left exterior cover 33 has an edge shaped to be bent laterally inward. As shown in FIGS. 7 to 9, the left exterior cover 33 is provided with a plurality of lock pawls 51 on the edge thereof. As shown in FIG. 5, the left side cover 23 includes a plurality of lock holes 52. It should be noted that in the drawings, reference numerals 51 and 52 are assigned to only part of the lock pawls 51 and lock holes 52 without being assigned to the others of the lock pawls 51 and lock holes 52. The plural lock holes 52 are disposed along the opening 35. The lock pawls 51 of the left exterior cover 33 are locked to the lock holes 52 of the left side cover 23, whereby the left exterior cover 33 is fixed at the edge thereof to the left side cover 23.

As shown in FIG. 7, the left exterior cover 33 includes a plurality of attachment portions 53 to 57. The left exterior cover 33 is attached at the plural attachment portions 53 to 57 to the left side cover 23. The plural attachment portions 53 to 57 protrude from the inner surface of the left exterior cover 33. The plural attachment portions 53 to 57 include a first attachment portion 53, a second attachment portion 54, a third attachment portion 55, a fourth attachment portion 56, and a fifth attachment portion 57. The first attachment portion 53 protrudes from the inner surface of the first extending portion 41. The second attachment portion 54 protrudes from the inner surface of the second extending portion 42. The third attachment portion 55 protrudes from the inner surface of the third extending portion 43. The fourth attachment portion 56 protrudes from the inner surface of the fourth extending portion 44. The fifth attachment portion 57 protrudes from the inner surface of the middle portion 40.

As shown in FIG. 5, the left side cover 23 includes a plurality of support portions 58 to 62. The plural attachment portions 53 to 57 are attached to the plural support portions 58 to 62, respectively. The plural support portions 58 to 62 include a first support portion 58, a second support portion 59, a third support portion 60, a fourth support portion 61, and a fifth support portion 62. The first attachment portion 53 is attached to the first support portion 58. For example, the first attachment portion 53 is attached to the first support portion 58 by a bolt. The second attachment portion 54 is attached to the second support portion 59. The third attachment portion 55 is attached to the third support portion 60. The fourth attachment portion 56 is attached to the fourth support portion 61. The fifth attachment portion 57 is attached to the fifth support portion 62. For example, each of the second to fifth support portions 59 to 62 includes a hole. The second to fifth attachment portions 54 to 57 are inserted into the holes of the second to fifth support portions 59 to 62, respectively. Accordingly, the left exterior cover 33 is fixed to the left side cover 23.

As shown in FIG. 7, the left exterior cover 33 includes a plurality of holes 63 and 64. As shown in FIG. 5, the left side cover 23 includes a plurality of bolt holes 65 and 66. The plural holes 63 and 64 and the plural bolt holes 65 and 66 are penetrated by bolts, whereby the left exterior cover 33 is fixed to the left side cover 23. The plural holes 63 and 64, when described in detail, include a first hole 63 and a second hole 64. The first hole 63 is provided in the first extending portion 41. The second hole 64 is provided in the second extending portion 42. The plural bolt holes 65 and 66 include a first bolt hole 65 and a second bolt hole 66. The first bolt hole 65 is provided in the left side cover 23 in correspondence with the position of the first hole 63. The second bolt hole 66 is provided in the left side cover 23 in correspondence with the position of the second hole 64. The first bolt hole 65 and the first hole 63 are penetrated by a bolt 67 shown in FIG. 4. The second bolt hole 66 and the second hole 64 are penetrated by a bolt 68 shown in FIG. 4.

As shown in FIG. 4, as seen in the vehicle side view, an upper edge 411 of the first extending portion 41 slants forward and upward. As seen in the vehicle side view, the upper edge 411 of the first extending portion 41 is disposed along the center cover 25. As seen in the vehicle side view, a lower edge 412 of the first extending portion 41 slants forward and upward. As seen in the vehicle side view, the first extending portion 41 is shaped to be tapered forward and upward. As seen in the vehicle side view, an upper edge 421 of the second extending portion 42 slants forward and downward. As seen in the vehicle side view, a lower edge 422 of the second extending portion 42 slants forward and downward. As seen in the vehicle side view, the second extending portion 42 is shaped to be tapered forward and downward.

As seen in the vehicle side view, an upper edge 431 of the third extending portion 43 is disposed along part of a lower edge 501 of the seat 5. As seen in the vehicle side view, the upper edge 431 of the third extending portion 43 slants backward and upward. As seen in the vehicle side view, a lower edge 432 of the third extending portion 43 slants backward and upward. As seen in the vehicle side view, the third extending portion 43 is shaped to be tapered backward and upward. As seen in the vehicle side view, an upper edge 441 of the fourth extending portion 44 slants backward and downward. As seen in the vehicle side view, a lower edge 442 of the fourth extending portion 44 slants backward and upward. As seen in the vehicle side view, the fourth extending portion 44 is shaped to be tapered backward and downward.

As seen in the vehicle side view, a front end 413 of the first extending portion 41 and a front end 423 of the second extending portion 42 are located forward of a front end 502 of the seat 5. As seen in the vehicle side view, the front end 413 of the first extending portion 41 is located forward of a rear edge 221 of the leg shield 22. As seen in the vehicle side view, the front end 413 of the first extending portion 41 overlaps the leg shield 22. As seen in the vehicle side view, an upper end 414 of the first extending portion 41 is located above a lower end 251 of the center cover 25. As seen in the vehicle side view, the upper end 414 of the first extending portion 41 is located below an upper surface 503 of the seat 5.

As seen in the vehicle side view, the front end 423 of the second extending portion 42 is located backward of the leg shield 22. As seen in the vehicle side view, the front end 423 of the second extending portion 42 is located forward of a rear end 451 of the front recessed portion 45. As seen in the vehicle side view, a lower end 424 of the second extending portion 42 is located above the left footrest surface 31. As seen in the vehicle side view, the lower end 424 of the second extending portion 42 is disposed upwardly away from the left footrest surface 31. As seen in the vehicle side view, the lower end 424 of the second extending portion 42 is located above the lower lateral surface 37. As seen in the vehicle side view, the lower lateral surface 37 is at least partially disposed between the lower end 424 of the second extending portion 42 and the left footrest surface 31 in an up-and-down direction of the vehicle. The lower end 424 of the second extending portion 42 is located below the left tandem foot peg 27.

As seen in the vehicle side view, a rear end 433 of the third extending portion 43 is located backward of the front end 502 of the seat 5. As seen in the vehicle side view, the rear end 433 of the third extending portion 43 is located backward of a rear end 443 of the fourth extending portion 44. As seen in the vehicle side view, the rear end 433 of the third extending portion 43 is located backward of the left tandem foot peg 27. As seen in the vehicle side view, an upper end 434 of the third extending portion 43 is located above the upper end 414 of the first extending portion 41. As seen in the vehicle side view, the upper end 434 of the third extending portion 43 is located above the lower end 251 of the center cover 25.

As seen in the vehicle side view, a lower end 444 of the fourth extending portion 44 is located above the left footrest surface 31. As seen in the vehicle side view, the lower end 444 of the fourth extending portion 44 is disposed upwardly away from the left footrest surface 31. As seen in the vehicle side view, the lower end 444 of the fourth extending portion 44 is located above the lower lateral surface 37. As seen in the vehicle side view, the lower lateral surface 37 is at least partially disposed between the lower end 444 of the fourth extending portion 44 and the left footrest surface 31 in the up-and-down direction. As seen in the vehicle side view, the lower end 444 of the fourth extending portion 44 is located above the lower end 424 of the second extending portion 42. As seen in the vehicle side view, the fourth extending portion 44 is disposed to face an attachment portion 29 of the left tandem foot peg 27.

As seen in the vehicle side view, the rear end 451 of the front recessed portion 45 is disposed backward of the front end 413 of the first extending portion 41 and the front end 423 of the second extending portion 42. As seen in the vehicle side view, the rear end 451 of the front recessed portion 45 is located backward of the leg shield 22. As seen in the vehicle side view, the rear end 451 of the front recessed portion 45 is located forward of the front end 502 of the seat 5. As seen in the vehicle side view, an upper end 471 of the lower recessed portion 47 is located above the lower end 424 of the second extending portion 42. As seen in the vehicle side view, the upper end 471 of the lower recessed portion 47 is located backward of the front end 502 of the seat 5.

As seen in the vehicle side view, a front end 481 of the rear recessed portion 48 is located forward of the rear end 433 of the third extending portion 43 and the rear end 443 of the fourth extending portion 44. As seen in the vehicle side view, the front end 481 of the rear recessed portion 48 is located backward of the front end 502 of the seat 5. As seen in the vehicle side view, the front end 481 of the rear recessed portion 48 is located above the rear end 451 of the front recessed portion 45. As seen in the vehicle side view, the rear recessed portion 48 is located above the left tandem foot peg 27. As seen in the vehicle side view, the front end 481 of the rear recessed portion 48 is located forward of the left tandem foot peg 27. As seen in the vehicle side view, a lower end 461 of the upper recessed portion 46 is located below the upper end 414 of the first extending portion 41 and the upper end 434 of the third extending portion 43. As seen in the vehicle side view, the lower end 461 of the upper recessed portion 46 is located forward of the upper end 471 of the lower recessed portion 47.

As seen in the vehicle top view shown in FIG. 8, the first extending portion 41 extends forward and laterally outward. As seen in the vehicle top view, the second extending portion 42 extends forward and laterally inward. As seen in the vehicle top view, the third extending portion 43 extends backward and laterally outward. As seen in the vehicle top view, the fourth extending portion 44 extends backward and laterally outward.

As seen in the vehicle top view, the front end 413 of the first extending portion 41, the front end 423 of the second extending portion 42, the rear end 433 of the third extending portion 43, and the rear end 443 of the fourth extending portion 44 are disposed in positions different from each other in the vehicle width direction. As seen in the vehicle top view, the front end 413 of the first extending portion 41 is located laterally outside the front end 423 of the second extending portion 42. As seen in the vehicle top view, the front end 413 of the first extending portion 41 is located laterally inside the rear end 433 of the third extending portion 43. As seen in the vehicle top view, the front end 413 of the first extending portion 41 is located laterally inside the rear end 443 of the fourth extending portion 44.

As seen in the vehicle top view, the front end 423 of the second extending portion 42 is located laterally inside the rear end 433 of the third extending portion 43. As seen in the vehicle top view, the front end 423 of the second extending portion 42 is located laterally inside the rear end 443 of the fourth extending portion 44. As seen in the vehicle top view, the rear end 433 of the third extending portion 43 is located laterally inside the rear end 443 of the fourth extending portion 44. As seen in the vehicle top view, the upper edge of the left exterior cover 33 includes a lateral recessed portion 49 recessed laterally inward with respect to the back-and-forth direction of the vehicle. The lateral recessed portion 49 is provided in the position of the upper recessed portion 46.

As shown in FIG. 9, the rear recessed portion 48 is located laterally inside the third and fourth extending portions 43 and 44. The middle portion 40 is at least partially located laterally inside the front end 413 of the first extending portion 41. The middle portion 40 is at least partially located laterally inside the front end 423 of the second extending portion 42. The middle portion 40 is at least partially located laterally inside the rear end 433 of the third extending portion 43. As seen in the vehicle front view, the middle portion 40 is at least partially located laterally inside the rear end 443 of the fourth extending portion 44.

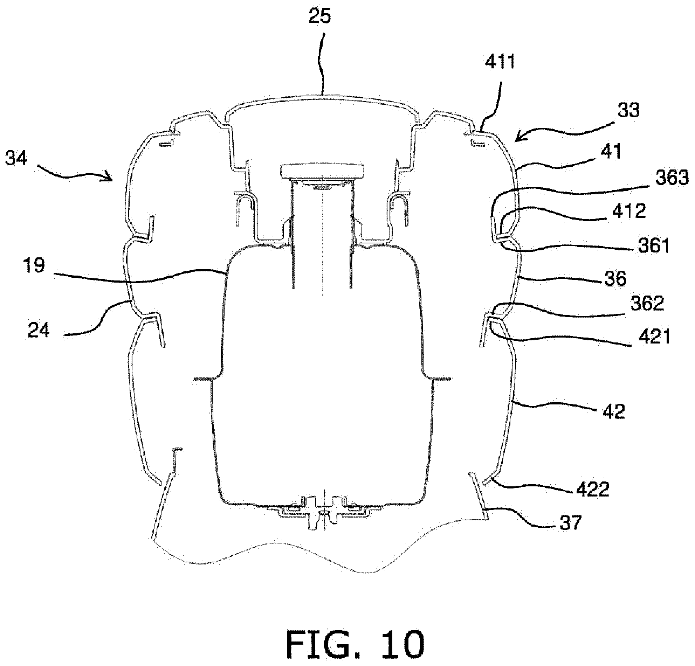

FIG. 10 is a cross-sectional view of FIG. 4 taken along line X-X. As shown in FIG. 10, the upper edge 411 of the first extending portion 41 is shaped to be bent laterally inward. The lower edge 412 of the first extending portion 41 is shaped to be bent laterally inward. As seen in the vertical cross-sectional view, the first extending portion 41 is shaped to be bent and protrude laterally outward. The upper edge 421 of the second extending portion 42 is shaped to be bent laterally inward. The lower edge 422 of the second extending portion 42 is shaped to be bent laterally inward. As seen in the vertical cross-sectional view, the second extending portion 42 is shaped to be bent and protrude laterally outward.

An upper edge 361 of the front lateral surface 36 of the left side cover 23 is shaped to be bent laterally inward. A lower edge 362 of the front lateral surface 36 is shaped to be bent laterally inward. As shown in FIG. 5, a flange 363 is connected to the upper and lower edges 361 and 362 of the front lateral surface 36. The flange 363 is provided with part of the lock holes 52 described above.

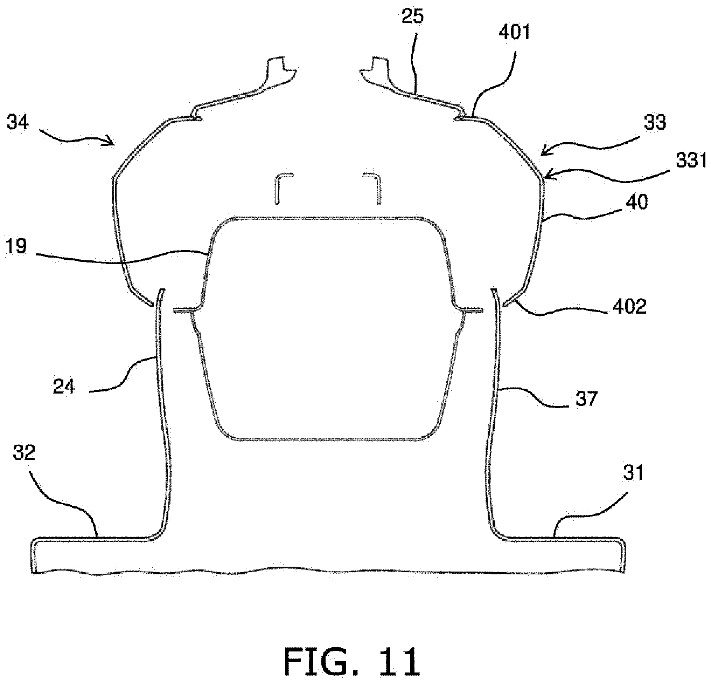

FIG. 11 is a cross-sectional view of FIG. 4 taken along line XI-XI. As shown in FIG. 11, an upper edge 401 of the middle portion 40 is shaped to be bent laterally inward. A lower edge 402 of the middle portion 40 is shaped to be bent laterally inward. As seen in the vertical cross-sectional view, the middle portion 40 is shaped to be bent and protrude laterally outward. The lower lateral surface 37 of the left side cover 23 is shaped to be recessed laterally inward in a position below the middle portion 40. In other words, the lower lateral surface 37 of the left side cover 23 is shaped to be recessed laterally inward in a position below the lower recessed portion 47.

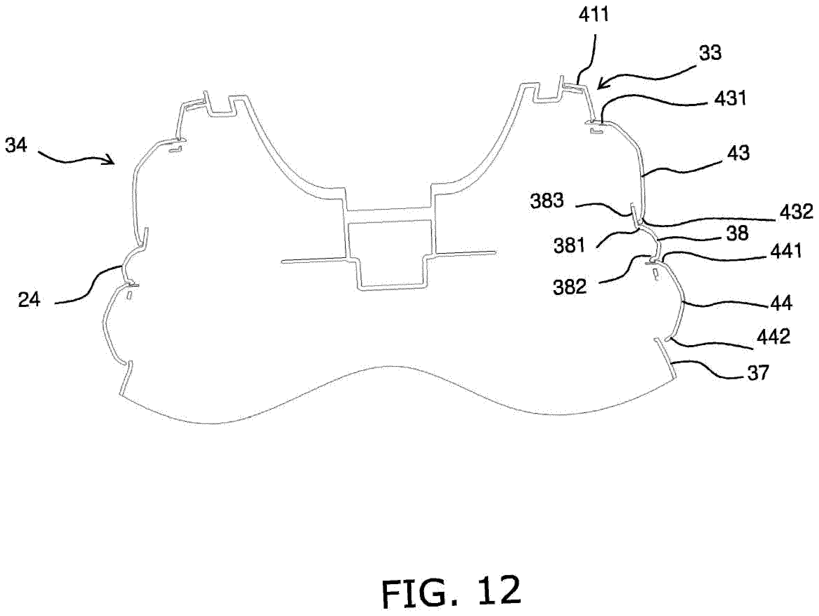

FIG. 12 is a cross-sectional view of FIG. 4 taken along line XII-XII. As shown in FIG. 12, the upper edge 431 of the third extending portion 43 is shaped to be bent laterally inward. The lower edge 432 of the third extending portion 43 is shaped to be bent laterally inward. As seen in the vertical cross-sectional view, the third extending portion 43 is shaped to be bent and protrude laterally outward. The upper edge 441 of the fourth extending portion 44 is shaped to be bent laterally inward. The lower edge 442 of the fourth extending portion 44 is shaped to be bent laterally inward. As seen in the vertical cross-sectional view, the fourth extending portion 44 is shaped to be bent and protrude laterally outward.

An upper edge 381 of the rear lateral surface 38 of the left side cover 23 is shaped to be bent laterally inward. A lower edge 382 of the rear lateral surface 38 is shaped to be bent laterally inward. As shown in FIG. 5, a flange 383 is connected to the upper and lower edges 381 and 382 of the rear lateral surface 38. The flange 383 is provided with part of the lock holes 52 described above.

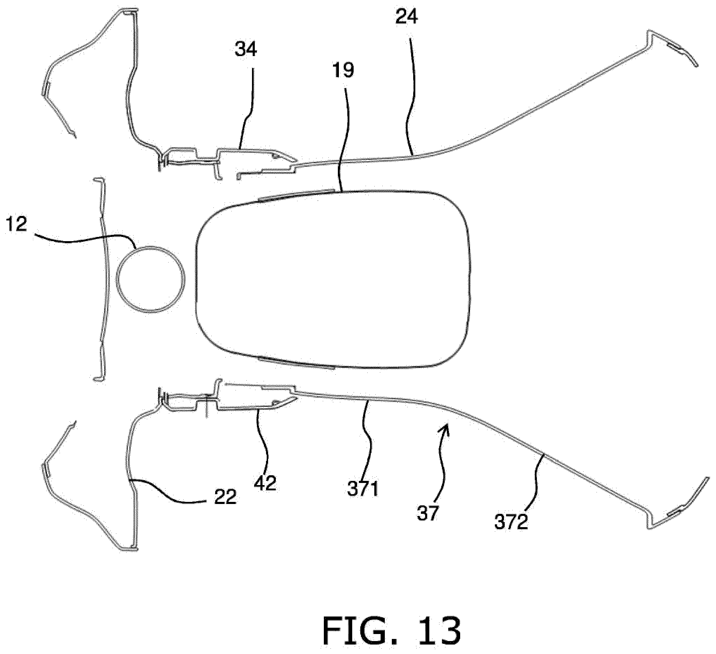

FIG. 13 is a cross-sectional view of FIG. 4 taken along line XIII-XIII. As shown in FIG. 13, a rear portion 372 of the lower lateral surface 37 slants forward and laterally inward with respect to the back-and-forth direction of the vehicle. A front portion 371 of the lower lateral surface 37 is located laterally inside the second extending portion 42 in a position behind the second extending portion 42.

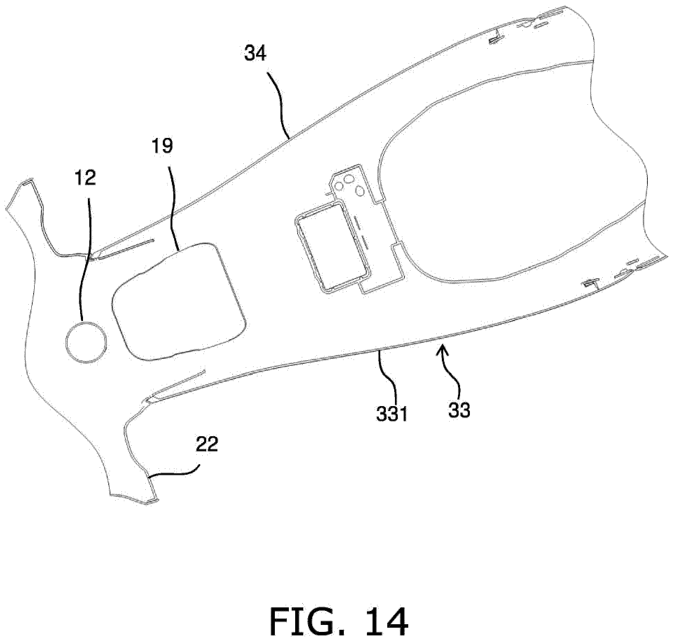

As shown in FIG. 6, the left exterior cover 33 includes a first ridge 331, a second ridge 332, and a third ridge 333. The first ridge 331 extends over a range from the second extending portion 42 to the third extending portion 43 through the middle portion 40. The second ridge 332 extends from the first extending portion 41 to the middle portion 40. The third ridge 333 extends from the fourth extending portion 44 to the middle portion 40. As seen in the vehicle side view, the first ridge 331 slants backward and upward with respect to the back-and-forth direction of the vehicle. FIG. 14 is a cross-sectional view of FIG. 4 taken along line XIV-XIV. The first ridge 331 slants forward and laterally inward.

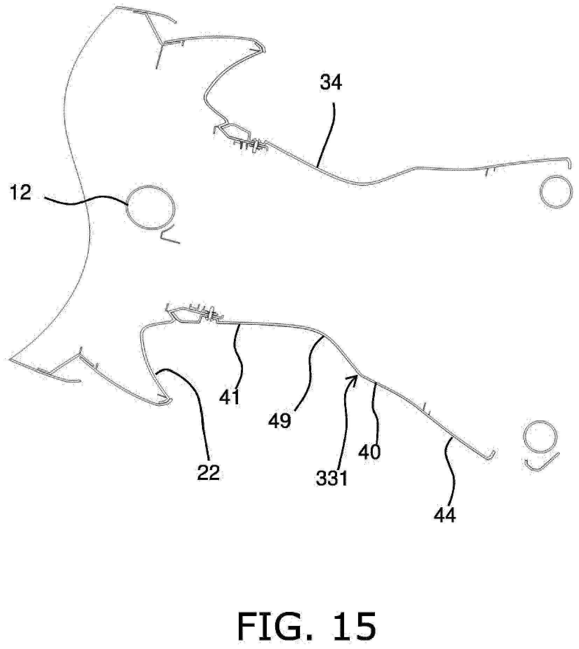

FIG. 15 is a cross-sectional view of FIG. 4 taken along line XV-XV. As shown in FIG. 15, the first extending portion 41 slants backward and laterally inward. The fourth extending portion 44 slants forward and laterally inward. The lateral recessed portion 49 described above is located between the first extending portion 41 and the middle portion 40. The lateral recessed portion 49 extends downward from the upper edge of the left exterior cover 33 to the first ridge 331.

The right side cover 24 and the right exterior cover 34 are approximately the same in shape as the left side cover 23 and the left exterior cover 33, excluding that the right side cover 24 and the right exterior cover 34 are bilaterally symmetric to the left side cover 23 and the left exterior cover 33. Because of this, detailed explanation of the right side cover 24 and the right exterior cover 34 will be omitted.

In the straddled vehicle 1 according to the present embodiment explained above, the left exterior cover 33 is formed in an X-shape by the first to fourth extending portions 41 to 44 and the front, rear, upper, and lower recessed portions 45 to 48. Thus, the left exterior cover 33 has the X-shape with many protrusions and recesses. Hence, the left exterior cover 33 can be inhibited from being enlarged in the vehicle width direction, and simultaneously, can be enhanced in stiffness.

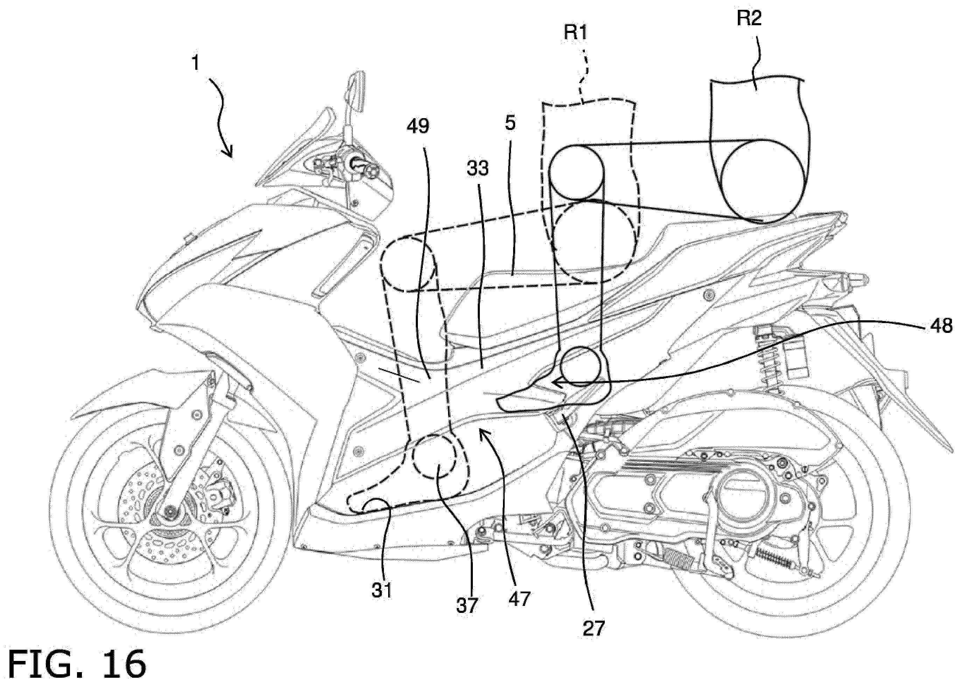

The lower end 424 of the second extending portion 42 and the lower end 444 of the fourth extending portion 44 are located above the lower lateral surface 37. Besides, the lower recessed portion 47 exists above the left footrest surface 31. Because of this, even when the left exterior cover 33 is provided as a large-sized component, degradation in comfort for the foot of the rider can be inhibited. FIG. 16 is a diagram showing a rider R1 and a passenger R2 riding in tandem on the straddled vehicle 1. As shown in FIG. 16, the foot of the rider R1 is located below the lower recessed portion 47. Because of this, a large space is reliably produced for putting the foot of the rider R1. Accordingly, comfort for the foot of the rider R1 is enhanced.

The lower lateral surface 37 is located laterally inside the foot of the rider R1. The lower lateral surface 37 is shaped to be recessed laterally inward. Because of this, a large space is reliably produced for putting the foot of the rider R1. Accordingly, comfort for the foot of the rider R1 is further enhanced. A part of the leg, lower than the knee, of the rider R1 lies laterally outside the left exterior cover 33. The lateral recessed portion 49 described above is disposed in the position that the leg of the rider R1 lies. Accordingly, comfort for the leg of the rider R1 is enhanced.

The foot of the passenger R2 is disposed laterally outside the rear recessed portion 48. Because of this, a large space is reliably produced for putting the foot of the passenger R2. Accordingly, comfort for the foot of the passenger R2 is enhanced. Likewise, the right exterior cover 34 can achieve advantageous effects similar to those achieved by the left exterior cover 33 described above.

One embodiment of the present teaching has been explained above. However, the present teaching is not limited to the embodiment described above, and a variety of changes can be made. made, without departing from the scope of this invention defined by the appended claims.

The structure of the straddled vehicle 1 is not limited to that in the embodiment described above and may be changed. For example, the number of front wheels is not limited to one, and alternatively, may be greater than one. The number of rear wheels is not limited to one, and alternatively, may be greater than one. The structure of the vehicle body frame 2 is not limited to that in the embodiment described above and may be changed. For example, the down frame 12, the lower frame 13, the rear frame 14, or the coupling frame 15 may be changed in shape.

Either or both of the left and right exterior covers 33 and 34 may be changed in shape. For example, the first to fourth extending portions 41 to 44 may be changed in position or shape. The front, rear, upper, and lower recessed portions 45 to 48 may be changed in position or shape. Either or both of the left and right side covers 23 and 24 may be changed in shape. For example, the front lateral surface 36, the lower lateral surface 37, or the rear lateral surface 38 may be changed in shape or position.

## Claims

1. A straddled vehicle (1) comprising:
a head pipe (11);
a down frame (12) extending downward from the head pipe (11) with regard to an up-and-down direction of the vehicle;
a seat (5) arranged behind the head pipe (11) with regard to a back-and-forth direction of the vehicle, and on at least one of a left side and a right side of the vehicle comprises
a leg shield (22) disposed behind the head pipe (11) and the down frame (12) with regard to the back-and-forth direction of the vehicle;
the seat (5) is disposed behind the leg shield (22) with regard to the back-and-forth direction of the vehicle;
a side cover (23,24) disposed below the seat (5) with regard to the up-and-down direction of the vehicle, the side cover (23,24) disposed between the seat (5) and the leg shield (22);
an undercover (30) connected to a lower portion of the side cover (23,24), the undercover (30) including a footrest surface (31,32) extending in the back-and-forth direction of the vehicle; and
an exterior cover (33,34) attached to the side cover (23,24), **characterized in that** the exterior cover (33,34) includes
a middle portion (40) with regard to the back-and-forth direction of the vehicle,
a first extending portion (41) extending forward with regard to the back-and-forth direction of the vehicle and obliquely upward with regard to the up-and-down direction of the vehicle from the middle portion (40),
a second extending portion (42) extending forward with regard to the back-and-forth direction of the vehicle and obliquely downward with regard to the up-and-down direction of the vehicle from the middle portion (40),
a third extending portion (43) extending backward with regard to the back-and-forth direction of the vehicle and obliquely upward with regard to the up-and-down direction of the vehicle from the middle portion (40),
a fourth extending portion (44) extending backward with regard to the back-and-forth direction of the vehicle and obliquely downward with regard to the up-and-down direction of the vehicle from the middle portion (40),
a front recessed portion (45) located between the first extending portion (41) and the second extending portion (42) with regard to the up-and-down direction of the vehicle, the front recessed portion (45) recessed backward with regard to the back-and-forth direction of the vehicle,
an upper recessed portion (46) located between the first extending portion (41) and the third extending portion (43) with regard to the back-and-forth direction of the vehicle, the upper recessed portion (46) recessed downward with regard to the up-and-down direction of the vehicle,
a lower recessed portion (47) located between the second extending portion (42) and the fourth extending portion (44) with regard to the back-and-forth direction of the vehicle, the lower recessed portion (47) recessed upward with regard to the up-and-down direction of the vehicle, and
a rear recessed portion (48) located between the third extending portion (43) and the fourth extending portion (44) with regard to the up-and-down direction of the vehicle,
the rear recessed portion (48) recessed forward with regard to the back-and-forth direction of the vehicle,
the side cover (23,24) includes a lower lateral surface (37) disposed below the exterior cover (33,34) with regard to the up-and-down direction of the vehicle, and
a lower end (424) of the second extending portion (42) and a lower end (444) of the fourth extending portion (44) are disposed upwardly away from the footrest surface (31,32) with regard to the up-and-down direction of the vehicle.

2. The straddled vehicle (1) according to claim 1, wherein the lower lateral surface (37) is at least partially disposed between the lower end (424) of the second extending portion (42) and the footrest surface (31,32) in the up-and-down direction of the vehicle, and
the lower lateral surface (37) is at least partially disposed between the lower end (444) of the fourth extending portion (44) and the footrest surface (31,32) in the up-and-down direction of the vehicle.

3. The straddled vehicle (1) according to claim 1 or 2, wherein the lower lateral surface (37) is shaped to be recessed laterally inward with regard to a width direction of the vehicle in a position below the lower recessed portion (47) with regard to the up-and-down direction of the vehicle.

4. The straddled vehicle (1) according to any of claims 1 to 3, wherein the exterior cover (33,34) is shaped to be recessed laterally inward with regard to the width direction of the vehicle in a position of the upper recessed portion (46).

5. The straddled vehicle (1) according to any of claims 1 to 4, further comprising:
a tandem foot peg (27,28) disposed below the seat (5) with regard to the up-and-down direction of the vehicle, wherein the rear recessed portion (48) is located above the tandem foot peg (27,28) with regard to the up-and-down direction of the vehicle.

6. The straddled vehicle (1) according to any of claims 1 to 5, wherein the rear recessed portion (48) is located laterally inside the third extending portion (43) and the fourth extending portion (44) with regard to the width direction of the vehicle.

7. The straddled vehicle (1) according to any of claims 1 to 6, wherein the lower end (444) of the fourth extending portion (44) is located above the lower end (424) of the second extending portion (42) with regard to the up-and-down direction of the vehicle.

8. The straddled vehicle (1) according to any of claims 1 to 7, wherein a rear end (433) of the third extending portion (43) is located backward of a rear end (443) of the fourth extending portion (44) with regard to the back-and-forth direction of the vehicle.

9. The straddled vehicle (1) according to any of claims 1 to 8, wherein an upper end (434) of the third extending portion (43) is located above an upper end (414) of the first extending portion (41) with regard to the up-and-down direction of the vehicle.

10. The straddled vehicle (1) according to any of claims 1 to 9, wherein the exterior cover (33,34) includes a first ridge (331) extending over a range from the second extending portion (42) to the third extending portion (43) through the middle portion (40).

11. The straddled vehicle (1) according to any of claims 1 to 10, wherein the exterior cover (33,34) includes
a second ridge (332) extending from the first extending portion (41) to the middle portion (40), and
a third ridge (333) extending from the fourth extending portion (44) to the middle portion (40).

12. The straddled vehicle (1) according to any of claims 1 to 11, wherein a front end (413) of the first extending portion (41) and a front end (423) of the second extending portion (42) are located forward of a front end (502) of the seat (5) with regard to the back-and-forth direction of the vehicle.

13. The straddled vehicle (1) according to any of claims 1 to 12, wherein the rear end (433) of the third extending portion (43) and the rear end (443) of the fourth extending portion (44) are located backward of the front end (502) of the seat (5) with regard to the back-and-forth direction of the vehicle.

14. The straddled vehicle (1) according to any of claims 1 to 13, wherein the front end (413) of the first extending portion (41), the front end (423) of the second extending portion (42), the rear end (433) of the third extending portion (43), and the rear end (443) of the fourth extending portion (44) are disposed in positions different from each other with regard to the width direction of the vehicle and as seen in a vehicle top view.

15. The straddled vehicle (1) according to any of claims 1 to 14, wherein the middle portion (40) is at least partially located laterally inside the front end (413) of the first extending portion (41) with regard to the width direction of the vehicle,
the middle portion (40) is at least partially located laterally inside the front end (423) of the second extending portion (42) with regard to the width direction of the vehicle,
the middle portion (40) is at least partially located laterally inside the rear end (433) of the third extending portion (43) with regard to the width direction of the vehicle, and the middle portion (40) is at least partially located laterally inside the rear end (443) of the fourth extending portion (44) with regard to the width direction of the vehicle.

## Patentansprüche

1. Ein Spreiz-Sitz-Fahrzeug (1), das umfasst:
ein Kopf-Rohr (11);
einen Unter-Rahmen (12), der sich von dem Kopf-Rohr (11) nach unten in Bezug auf eine Aufwärts-und-Abwärts-Richtung des Fahrzeugs erstreckt;
einen Sitz (5), der hinter dem Kopf-Rohr (11) in Bezug auf eine Rückwärts-und-Vorwärts-Richtung des Fahrzeugs angeordnet ist, und auf zumindest einer von einer linken und einer rechten Seite umfasst das Fahrzeug
ein Beinschild (22), das hinter dem Kopf-Rohr (11) und dem Unter-Rahmen (12) in Bezug auf die Rückwärts-und-Vorwärts-Richtung des Fahrzeugs angeordnet ist;
der Sitz (5) ist hinter dem Beinschild (22) in Bezug auf die Rückwärts-und-Vorwärts-Richtung des Fahrzeugs angeordnet;
eine Seiten-Abdeckung (23, 24), die unterhalb des Sitzes (5) in Bezug auf die Aufwärts-und-Abwärts-Richtung des Fahrzeugs angeordnet ist, die Seiten-Abdeckung (23, 24) ist zwischen dem Sitz (5) und dem Beinschild (22) angeordnet;
eine Unter-Abdeckung (30), die mit einem unteren Abschnitt der Seiten-Abdeckung (23, 24) verbunden ist, die Unter-Abdeckung (30) beinhaltet eine Fußrasten-Fläche (31, 32), die sich in der Rückwärts-und-Vorwärts-Richtung des Fahrzeugs erstreckt;
und
eine Außen-Abdeckung (33, 34), die an der Seiten-Abdeckung (23, 24) angebracht ist, **dadurch gekennzeichnet, dass**
die Außen-Abdeckung (33,34) beinhaltet
einen Mitten-Abschnitt (40) in Bezug auf die Rückwärts-und-Vorwärts-Richtung des Fahrzeugs,
einen ersten Erstreckungs-Abschnitt (41), der sich nach vorne in Bezug auf die Rückwärts-und-Vorwärts-Richtung des Fahrzeugs und schräg nach oben in Bezug auf die Aufwärts-und-Abwärts-Richtung vom Mitten-Abschnitt (40) erstreckt,
einen zweiten Erstreckungs-Abschnitt (42), der sich nach vorne in Bezug auf die Rückwärts-und-Vorwärts-Richtung des Fahrzeugs und schräg nach unten in Bezug auf die Aufwärts-und-Abwärts-Richtung vom Mitten-Abschnitt (40) erstreckt,
einen dritten Erstreckungs-Abschnitt (43), der nach hinten sich in Bezug auf die Rückwärts-und-Vorwärts-Richtung des Fahrzeugs und schräg nach oben in Bezug auf die Aufwärts-und-Abwärts-Richtung vom Mitten-Abschnitt (40) erstreckt,
einen vierten Erstreckungs-Abschnitt (44), der sich nach hinten in Bezug auf die Rückwärts-und-Vorwärts-Richtung des Fahrzeugs und schräg nach unten in Bezug auf die Aufwärts-und-Abwärts-Richtung vom Mitten-Abschnitt (40) erstreckt,
einen vorderen vertieften Abschnitt (45), der zwischen dem ersten Erstreckungs-Abschnitt (41) und dem zweiten Erstreckungs-Abschnitt (42) in Bezug auf die Aufwärts-und-Abwärts-Richtung angeordnet ist, der vordere vertiefte Abschnitt (45) ist nach hinten vertieft in Bezug auf die Rückwärts-und-Vorwärts-Richtung des Fahrzeugs,
einen oberen vertieften Abschnitt (46), der zwischen dem ersten Erstreckungs-Abschnitt (41) und dem dritten Erstreckungs-Abschnitt (43) in Bezug auf die Rückwärts-und-Vorwärts-Richtung des Fahrzeugs angeordnet ist, der obere vertiefte Abschnitt (46) ist nach unten vertieft in Bezug auf die Aufwärts-und-Abwärts-Richtung,
einen unteren vertieften Abschnitt (47), der zwischen dem zweiten Erstreckungs-Abschnitt (42) und dem vierten Erstreckungs-Abschnitt (44) in Bezug auf die Rückwärts-und-Vorwärts-Richtung des Fahrzeugs angeordnet ist, der untere vertiefte Abschnitt (47) ist nach oben vertieft in Bezug auf die Aufwärts-und-Abwärts-Richtung,
und
einen hinteren vertieften Abschnitt (48), der zwischen dem dritten Erstreckungs-Abschnitt (43) und dem vierten Erstreckungs-Abschnitt (44) in Bezug auf die Aufwärts-und-Abwärts-Richtung angeordnet ist, der hintere vertiefte Abschnitt (48) ist nach vorne vertieft in Bezug auf die Rückwärts-und-Vorwärts-Richtung des Fahrzeugs,
die Seiten-Abdeckung (23, 24) beinhaltet eine untere Seitenfläche (37), die unterhalb der Außen-Abdeckung (33, 34) in Bezug auf die Aufwärts-und-Abwärts-Richtung des Fahrzeugs angeordnet ist, und
ein unteres Ende (424) des zweiten Erstreckungs-Abschnitts (42) und ein unteres Ende (444) des vierten Erstreckungs-Abschnitts (44) sind nach oben weg von der Fußrasten-Fläche (31, 32) in Bezug auf die Aufwärts-und-Abwärts-Richtung des Fahrzeugs angeordnet.

2. Das Spreiz-Sitz-Fahrzeug (1) gemäß Anspruch 1, wobei die untere Seitenfläche (37) zumindest teilweise zwischen dem unteren Ende (424) des zweiten Erstreckungs-Abschnitts (42) und der Fußrasten-Fläche (31, 32) in der Aufwärts-und-Abwärts-Richtung des Fahrzeugs angeordnet ist, und
die untere Seitenfläche (37) zumindest teilweise zwischen dem unteren Ende (444) des vierten Erstreckungs-Abschnitts (44) und der Fußrasten-Fläche (31, 32) in der Aufwärts-und-Abwärts-Richtung des Fahrzeugs angeordnet ist.

3. Das Spreiz-Sitz-Fahrzeug (1) gemäß Anspruch 1 oder 2, wobei die untere Seitenfläche (37) geformt ist, um seitlich nach innen ausgespart zu sein in Bezug auf eine Breiten-Richtung des Fahrzeugs in einer Position unterhalb des unteren vertieften Abschnitts (47) in Bezug auf die Aufwärts-und-Abwärts-Richtung des Fahrzeugs.

4. Das Spreiz-Sitz-Fahrzeug (1) gemäß irgendeinem der Ansprüche 1 bis 3, wobei die Außen-Abdeckung (33, 34) geformt ist, um seitlich nach innen ausgespart zu sein in Bezug auf die Breiten-Richtung des Fahrzeugs in einer Position des oberen vertieften Abschnitts (46).

5. Das Spreiz-Sitz-Fahrzeug (1) gemäß irgendeinem der Ansprüche 1 bis 4, das weiterhin umfasst:
eine Tandem-Fußraste (27, 28), die unterhalb des Sitzes (5) in Bezug auf die Aufwärts-und-Abwärts-Richtung des Fahrzeugs angeordnet ist, wobei der hintere vertiefte Abschnitt (48) oberhalb der Tandem-Fußraste (27, 28) in Bezug auf die Aufwärts-und-Abwärts-Richtung des Fahrzeugs angeordnet ist.

6. Das Spreiz-Sitz-Fahrzeug (1) gemäß irgendeinem der Ansprüche 1 bis 5, wobei der hintere vertiefte Abschnitt (48) seitlich innerhalb des dritten Erstreckungs-Abschnitts (43) und des vierten Erstreckungs-Abschnitts (44) in Bezug auf die Breiten-Richtung des Fahrzeugs angeordnet ist.

7. Das Spreiz-Sitz-Fahrzeug (1) gemäß irgendeinem der Ansprüche 1 bis 6, wobei das untere Ende (444) des vierten Erstreckungs-Abschnitts (44) oberhalb des unteren Endes (424) des zweiten Erstreckungs-Abschnitts (42) in Bezug auf die Aufwärts-und-Abwärts-Richtung des Fahrzeugs angeordnet ist.

8. Das Spreiz-Sitz-Fahrzeug (1) gemäß irgendeinem der Ansprüche 1 bis 7, wobei ein hinteres Ende (433) des dritten Erstreckungs-Abschnitts (43) hinter einem hinteren Ende (443) des vierten Erstreckungs-Abschnitts (44) in Bezug auf die Rückwärts-und-Vorwärts-Richtung des Fahrzeugs angeordnet ist.

9. Das Spreiz-Sitz-Fahrzeug (1) gemäß irgendeinem der Ansprüche 1 bis 8, wobei ein oberes Ende (434) des dritten Erstreckungs-Abschnitts (43) oberhalb eines oberen Endes (414) des ersten Erstreckungs-Abschnitts (41) in Bezug auf die Aufwärts-und-Abwärts-Richtung des Fahrzeugs angeordnet ist.

10. Das Spreiz-Sitz-Fahrzeug (1) gemäß irgendeinem der Ansprüche 1 bis 9, wobei die Außen-Abdeckung (33, 34) eine erste Rippe (331) beinhaltet, die sich über einen Bereich von dem zweiten Erstreckungs-Abschnitt (42) zu dem dritten Erstreckungs-Abschnitt (43) durch den Mitten-Abschnitt (40) erstreckt.

11. Das Spreiz-Sitz-Fahrzeug (1) gemäß irgendeinem der Ansprüche 1 bis 10, wobei die Außen-Abdeckung (33, 34) beinhaltet
einen zweiten Rippe (332), die sich von dem ersten Erstreckungs-Abschnitt (41) zu dem Mitten-Abschnitt (40) erstreckt, und
einen dritten Rippe (333), die sich von dem vierten Erstreckungs-Abschnitt (44) zu dem Mitten-Abschnitt (40) erstreckt.

12. Das Spreiz-Sitz-Fahrzeug (1) gemäß irgendeinem der Ansprüche 1 bis 11, wobei ein vorderes Ende (413) des ersten Erstreckungs-Abschnitts (41) und ein vorderes Ende (423) des zweiten Erstreckungs-Abschnitts (42) vor einem vorderen Ende (502) des Sitzes (5) in Bezug auf die Rückwärts-und-Vorwärts-Richtung des Fahrzeugs angeordnet sind.

13. Das Spreiz-Sitz-Fahrzeug (1) gemäß irgendeinem der Ansprüche 1 bis 12, wobei das hintere Ende (433) des dritten Erstreckungs-Abschnitts (43) und das hintere Ende (443) des vierten Erstreckungs-Abschnitts (44) hinter dem vorderen Ende (502) des Sitzes (5) in Bezug auf die Rückwärts-und-Vorwärts-Richtung des Fahrzeugs angeordnet sind.

14. Das Spreiz-Sitz-Fahrzeug (1) gemäß irgendeinem der Ansprüche 1 bis 13, wobei das vordere Ende (413) des ersten Erstreckungs-Abschnitts (41), das vordere Ende (423) des zweiten Erstreckungs-Abschnitts (42), das hintere Ende (433) des dritten Erstreckungs-Abschnitts (43) und das hintere Ende (443) des vierten Erstreckungs-Abschnitts (44) in voneinander verschiedenen Positionen in Bezug auf die Breiten-Richtung des Fahrzeugs und in der Draufsicht auf das Fahrzeug gesehen angeordnet sind.

15. Das Spreiz-Sitz-Fahrzeug (1) gemäß irgendeinem der Ansprüche 1 bis 14, wobei der Mitten-Abschnitt (40) zumindest teilweise seitlich innerhalb des vorderen Endes (413) des ersten Erstreckungs-Abschnitts (41) in Bezug auf die Breiten-Richtung des Fahrzeugs angeordnet ist,
der Mitten-Abschnitt (40) zumindest teilweise seitlich innerhalb des vorderen Endes (423) des zweiten Erstreckungs-Abschnitts (42) in Bezug auf die Breiten-Richtung des Fahrzeugs angeordnet ist,
der Mitten-Abschnitt (40) zumindest teilweise seitlich innerhalb des hinteren Endes (433) des dritten Erstreckungs-Abschnitts (43) in Bezug auf die Breiten-Richtung des Fahrzeugs angeordnet ist, und
der Mitten-Abschnitt (40) zumindest teilweise seitlich innerhalb des hinteren Endes (443) des vierten Erstreckungs-Abschnitts (44) in Bezug auf die Breiten-Richtung des Fahrzeugs angeordnet ist.

## Revendications

1. Véhicule à enfourcher (1) comprenant :
un tube de tête (11) ;
un châssis descendant (12) qui s'étend vers le bas depuis le tube de tête (11) par rapport à une direction haut-bas du véhicule ;
un siège (5) agencé derrière le tube de tête (11) par rapport à la direction avant-arrière du véhicule, et au moins un côté parmi le côté gauche et le côté droit du véhicule comprenant
un bouclier de jambe (22) disposé derrière le tube de tête (11) et le châssis descendant (12) par rapport à la direction avant-arrière du véhicule ;
le siège (5) étant disposé derrière le bouclier de jambe (22) par rapport à la direction avant-arrière du véhicule ;
un carénage latéral (23, 24) disposé en dessous du siège (5) par rapport à la direction haut-bas du véhicule, le carénage latéral (23, 24) étant disposé entre le siège (5) et le bouclier de jambe (22) ;
un sous-carénage (30) connecté à une portion inférieure du carénage latéral (23, 24), le sous-carénage (30) comportant une surface de repose-pied (31, 32) qui s'étend en direction avant-arrière du véhicule ; et
un carénage extérieur (33, 34) attaché au carénage latéral (23, 24),
**caractérisé en ce que** le carénage extérieur (33, 34) comprend
une portion médiane (40) par rapport à la direction avant-arrière du véhicule,
une première portion d'extension (41) qui s'étend vers l'avant par rapport à la direction avant-arrière du véhicule et en oblique vers le haut par rapport à la direction haut-bas du véhicule depuis la portion médiane (40),
une deuxième portion d'extension (42) qui s'étend vers l'avant par rapport à la direction avant-arrière du véhicule et en oblique vers le bas par rapport à la direction haut-bas du véhicule depuis la portion médiane (40),
une troisième portion d'extension (43) qui s'étend vers l'arrière par rapport à la direction avant-arrière du véhicule et en oblique vers le haut par rapport à la direction haut-bas du véhicule depuis la portion médiane (40),
une quatrième portion d'extension (44) qui s'étend vers l'arrière par rapport à la direction avant-arrière du véhicule et en oblique vers le bas par rapport à la direction haut-bas du véhicule depuis la portion médiane (40),
une portion renfoncée avant (45) située entre la première portion d'extension (41) et la deuxième portion d'extension (42) par rapport à la direction haut-bas du véhicule,
la portion renfoncée avant (45) étant renfoncée vers l'arrière par rapport à la direction avant-arrière du véhicule,
une portion renfoncée supérieure (46) située entre la première portion d'extension (41) et la troisième portion d'extension (43) par rapport à la direction avant-arrière du véhicule, la portion renfoncée supérieure (46) étant renfoncée vers le bas par rapport à la direction haut-bas du véhicule,
une portion renfoncée inférieure (47) située entre la deuxième portion d'extension (42) et la quatrième portion d'extension (44) par rapport à la direction avant-arrière du véhicule, la portion renfoncée inférieure (47) étant renfoncée vers le haut par rapport à la direction haut-bas du véhicule, et
une portion renfoncée arrière (48) située entre la troisième portion d'extension (43) et la quatrième portion d'extension (44) par rapport à la direction haut-bas du véhicule,
la portion renfoncée arrière (48) étant renfoncée vers l'avant par rapport à la direction avant-arrière du véhicule,
le carénage latéral (23, 24) comportant une surface latérale inférieure (37) disposée sous le carénage extérieur (33, 34) par rapport à la direction haut-bas du véhicule, et
une extrémité inférieure (424) de la deuxième portion d'extension (42) et une extrémité inférieure (444) de la quatrième portion d'extension (44) étant disposées vers le haut en s'éloignant de la surface de repose-pied (31, 32) par rapport à la direction haut-bas du véhicule.

2. Véhicule à enfourcher (1) selon la revendication 1, dans lequel la surface latérale inférieure (37) est au moins partiellement disposée entre l'extrémité inférieure (424) de la deuxième portion d'extension (42) et la surface du repose-pied (31, 32) en direction haut-bas du véhicule, et
la surface latérale inférieure (37) est disposée au moins partiellement entre l'extrémité inférieure (444) de la quatrième portion d'extension (44) et la surface de repose-pied (31, 32) en direction haut-bas du véhicule.

3. Véhicule à enfourcher (1) selon la revendication 1 ou 2, dans lequel la surface latérale inférieure (37) est conformée pour être renfoncée latéralement vers l'intérieur par rapport à une direction de la largeur du véhicule dans une position située en dessous de la portion renfoncée inférieure (47) par rapport à la direction haut-bas du véhicule.

4. Véhicule à enfourcher (1) selon l'une quelconque des revendications 1 à 3, dans lequel le carénage extérieur (33, 34) est conformé pour être renfoncé latéralement vers l'intérieur par rapport à la direction de la largeur du véhicule dans une position de la portion renfoncée supérieure (46).

5. Véhicule à enfourcher (1) selon l'une quelconque des revendications 1 à 4, comprenant en outre :
un repose-pied tandem (27, 28) disposé sous le siège (5) par rapport à la direction haut-bas du véhicule, dans lequel la portion renfoncée arrière (48) est située au-dessus du repose-pied tandem (27, 28) par rapport à la direction haut-bas du véhicule.

6. Véhicule à enfourcher (1) selon l'une quelconque des revendications 1 à 5, dans lequel la portion renfoncée arrière (48) est située latéralement à l'intérieur de la troisième portion d'extension (43) et de la quatrième portion d'extension (44) par rapport à la direction de la largeur du véhicule.

7. Véhicule à enfourcher (1) selon l'une quelconque des revendications 1 à 6, dans lequel l'extrémité inférieure (444) de la quatrième portion d'extension (44) est située au-dessus de l'extrémité inférieure (424) de la deuxième portion d'extension (42) par rapport à la direction haut-bas du véhicule.

8. Véhicule à enfourcher (1) selon l'une quelconque des revendications 1 à 7, dans lequel l'extrémité arrière (433) de la troisième portion d'extension (43) est située à l'arrière d'une extrémité arrière (443) de la quatrième portion d'extension (44) par rapport à la direction avant-arrière du véhicule.

9. Véhicule à enfourcher (1) selon l'une quelconque des revendications 1 à 8, dans lequel une extrémité supérieure (434) de la troisième portion d'extension (43) est située au-dessus d'une extrémité supérieure (414) de la première portion d'extension (41) par rapport à la direction haut-bas du véhicule.

10. Véhicule à enfourcher (1) selon l'une quelconque des revendications 1 à 9, dans lequel le carénage extérieur (33, 34) comprend un premier rebord (331) qui s'étend sur une plage allant de la deuxième portion d'extension (42) à la troisième portion d'extension (43) à travers la portion médiane (40).

11. Véhicule à enfourcher (1) selon l'une quelconque des revendications 1 à 10, dans lequel le carénage extérieur (33, 34) comprend
un deuxième rebord (332) qui s'étend de la première portion d'extension (41) à la portion médiane (40), et
un troisième rebord (333) qui s'étend de la quatrième portion d'extension (44) à la portion médiane (40).

12. Véhicule à enfourcher (1) selon l'une quelconque des revendications 1 à 11, dans lequel une extrémité avant (413) de la première portion d'extension (41) et une extrémité avant (423) de la deuxième portion d'extension (42) sont situées en avant d'une extrémité avant (502) du siège (5) par rapport à la direction avant-arrière du véhicule.

13. Véhicule à enfourcher (1) selon l'une quelconque des revendications 1 à 12, dans lequel l'extrémité arrière (433) de la troisième portion d'extension (43) et l'extrémité arrière (443) de la quatrième portion d'extension (44) sont situées à l'arrière de l'extrémité avant (502) du siège (5) par rapport à la direction avant-arrière du véhicule.

14. Véhicule à enfourcher (1) selon l'une quelconque des revendications 1 à 13, dans lequel l'extrémité avant (413) de la première portion d'extension (41), l'extrémité avant (423) de la deuxième portion d'extension (42), l'extrémité arrière (433) de la troisième portion d'extension (43) et l'extrémité arrière (443) de la quatrième portion d'extension (44) sont disposées dans des positions différentes par rapport à la direction de la largeur du véhicule et en vue du dessus du véhicule.

15. Véhicule à enfourcher (1) selon l'une quelconque des revendications 1 à 14, dans lequel la portion médiane (40) est située au moins partiellement latéralement à l'intérieur de l'extrémité avant (413) de la première portion d'extension (41) par rapport à la direction de la largeur du véhicule,
la portion médiane (40) est située au moins partiellement latéralement à l'intérieur de l'extrémité avant (423) de la deuxième portion d'extension (42) par rapport à la direction de la largeur du véhicule,
la portion médiane (40) est située au moins partiellement latéralement à l'intérieur de l'extrémité arrière (433) de la troisième portion d'extension (43) par rapport à la direction de la largeur du véhicule, et
la portion médiane (40) est située au moins partiellement latéralement à l'intérieur de l'extrémité arrière (443) de la quatrième portion d'extension (44) par rapport à la direction de la largeur du véhicule.
